Europäisches Patentamt

(19) European Patent Office

Office européen des brevets

(11) Publication number: **0 401 150**
**A2**

(12) **EUROPEAN PATENT APPLICATION**

(21) Application number: **90610038.3**

(22) Date of filing: **28.05.90**

�milicrCl.5: **B29C 41/08, B29C 41/22,**
**A47K 3/02**

(30) Priority: **29.05.89 DK 2607/89**

(43) Date of publication of application:
**05.12.90 Bulletin 90/49**

(84) Designated Contracting States:
**AT BE CH DE DK ES FR GB GR IT LI LU NL SE**

(71) Applicant: **THERMOFORM a/s**
**Elektronvej 10**
**DK-2670 Greve Strand(DK)**

(72) Inventor: **Hansen, Helge**
**Storeholm 7**
**DK-2670 Greve Strand(DK)**

(74) Representative: **Schoenning, Soeren et al**
**c/o Kontor for INDUSTRIEL ENERET Jernbane**
**Allé 54**
**DK-2720 Vanloese(DK)**

(54) Method for the manufacture of a laminated article with a layer of vacuum-formed thermoplastic and a sprayed on layer of curable plastic as well as a bath tub manufactured by means of said method.

㊗ Method for the manufacture of a laminated article with a layer of vacuum-formed thermoplastic, preferably polymethylmetacrylate, as well as a sprayed on layer of a preferably glass fibre-reinforced curable plastic. In order to avoid during the spraying a strong liberation of vapours that are injurious to health, and to avoid a heat generation that is so strong that the vacuum-formed thermoplastic shell is deformed, the curable plastic, which is a polyurethane, is applied through spraying of a reactant mixture with such a relation between the polyol and the polyisocyanate components that an open time of 4-15 seconds is achieved, the polyurethane plastic being applied in such a number of layers succeeding one another that the desired thickness of the layer is attained and the relative humidity of the surroundings being, until curing has substantially taken place, under 60%, preferably under 40%. A bath tub manufactured by means of the method is provided with integral ducts for inlet of water and air and for outlet.

# METHOD FOR THE MANUFACTURE OF A LAMINATED ARTICLE WITH A LAYER OF VACUUM-FORMED THERMOPLASTIC AND A SPRAYED ON LAYER OF CURABLE PLASTIC AS WELL AS A BATH TUB MANUFACTURED BY MEANS OF SAID METHOD

The present invention relates to a method for the manufacture of a laminated article with a layer of vacuum-formed thermoplastic, preferably polymethyl metacrylate, as well as a sprayed on layer of a preferably glass fibre-reinforced curable plastic, as well as a bath tub manufactured by means of said method.

In known methods for the manufacture of laminated articles, such as bath tubs, shower trays for shower cabins and the like, glass fibre-reinforced polyester has been used for reinforcing the back side of the vacuum-formed shell, which with its hard and durable surface of acrylic plastic is well suited for making up the visible surface of the tub. Glass fibre-reinforced polyester is capable of giving the article the required strength, but has a number of drawbacks which impede production. The most important thing is that the polyester, particularly in uncured condition, liberates considerable amounts of styrene and acetone vapours, which are dangerous to inhale for the staff, which in order to ensure a compact glass fibre laminate have to be present near the article, while the laminate is being worked with a roller. Besides, there is a considerable consumption of time, the curing time for the plastic used having to be fairly long, as the heat of reaction during the curing otherwise will soften or deform the thermoplastic shell to be reinforced.

Methods are known, in which the glass fibres in short pieces are sprayed on to the article together with the polyester, but also with this method the laminate should be rolled in order to eliminate air locks, and the problems as to labour environment are at least the same as for manually laid up fibre glass.

To eliminate the problems in connection with the labour environment it has been proposed to place the thermoformed layer in a double-mould, in which polyester is injected, reinforcing elements having been placed in the mould in addition to the fibre- reinforcement, said elements imparting to the article a greater resistance towards concentrated loads. This method is unsuitable in connection with big articles, as the vaccum-formed shell has comparatively big inaccuracies in its dimensions, and too much manual work will be involved in cleaning the moulds and in applying anti-stick agent. Besides, the moulds are on account of the great pressure, they have to withstand, very costly.

Instead of injecting polyester in a closed mould it has been proposed to inject a foamed polyurethane plastic of the type, which during the curing acquires a surface that is more dense than the core of the material. Also for this method moulds that can withstand a great pressure are required, and the moulds are to make it possible to control the temperature in the hollow space of the mould. By this method a lot of manual work is required for the application of a non-stick agent and for sealing around the vacuum-formed shell.

It is possible to inject polyurethane foam direct to the vacuum-formed shell, but by this method the foam will not get the surface structure, which gives it the desired strength, and the reinforcing effect is therefore too small to make this method suited for for instance bath tubs.

The object of the present invention is to provide a method for the manufacture of a laminate of the kind mentioned by way of introduction, which method will not give any siginificant working environment problems and in which the manual work involved is most limited, and in which major steps of the manufacture can be carried out by robots.

The method according to the invention is characterized by the subject matter of the characterizing clause of claim 1. By spraying on a polyurethane curable plastic with a very short curing time, a massive layer of polyurethane can be built up layer by layer, said layer curing at a temperature of 60 - 80° without shrinking effects of any significance. Even with the short interval of 4-15 seconds, in which the polyurethane is open, a good sticking of the materials, which are suited for the manufacture of the vacuum-formed layer, is achieved. The quick curing contributes to making the production time of a laminated article fairly short, and the preparations for making the next article are few. To avoid swelling of the curable plastic on account of the air humidity reacting with the polyisocyanate, the air humidity of the surroundings during the spraying and curing has to be low.

On account of the building up of the layer of curable plastic layer by layer, it is possible during the building up to stop the spraying and place core elements in the shape of reinforcements or to form hollow spaces in the outer layer of curable plastic. After the placing of the core elements additional polyurethane is applied in order to embed the core elements. The core elements may be made from strong construction materials contributing essentially to the total strength of the article, but they may also be of a light porous material, which just serves as a core in a closed profiling in the finished laminate.

In case of the core elements pieces consisting of foamed polystyrene it is according to the invention possible to establish an opening in the core element and to remove the core element by means of a solvent for leaving free the hollow space.

In this embodiment the article, for instance a bath tub, may be provided with air or liquid ducts for letting in air or liquid to the tub or for connection of an overflow to a drain. Particularly in connection with the manufacture of so-called bubble bath tubs a big number of fittings and connecting pipes may be left out, the tub being shaped with the neceesary integral ducts moulded into the reinforcing polyurethane layer. The integral ducts also act as reinforcing, closed profiles contributing to making rigid the bottom and sides of the tub. The bath tub provided with integral ducts and branches is simple both as to manufacture and subsequent installation and may reduce the production costs by 50% or more compared with a traditional, polyester-reinforced tub with fittings installed afterwards.

The invention will be desribed in detail in the following with reference to the accompaning drawing which shows a section through a part of a laminated article in the shape of a bubble bath manufactured by the method according to the invention.

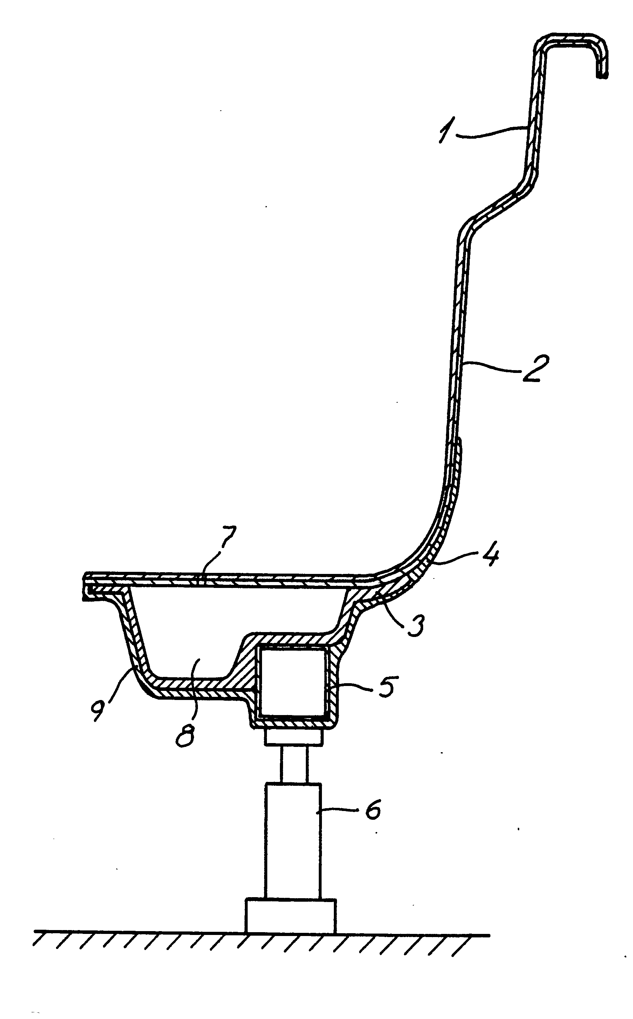

By the method according to the invention a shell produced by vaccum-forming and in the shape of the finished article is provided with a reinforcing layer of a curable plastic. As starting material for the shell acrylic plastic is preferably used, by means of which it is possible to achieve a smooth surface with a high finish, a low absorption of water and a good resistance towards chemicals, for instance detergents. In particular acrylic materials, which are laminates of a comparatively hard acrylic plastic and a more impact-resistant type, which contributes to a good adhesion of the curable plastic, are suitable for the purpose. Such a material is commercially available under the name "Vedril CS". After the vacuum-forming the article is placed in such a way that the back side is accessible from the top, i.e. it is orientated opposite to the orientation shown in the drawing.

A reactant mixture of a polyol component and a polyisocyanate component is now sprayed on. The mixture is adjusted by means of additives in the isocyanate component in such a way that an open time, the so-called pot-life, of 4-15 seconds is achived. Such a mixture will cure in 10-15 minutes at a temperature of 60-80.C and get a rigidity on the Shore D scale between 60 and 80. During the spraying on it is possible in the vapourized plastic to inject glass fibres, which are deposited randomly in the curable plastic and which add to the strength and rigidity of the layer of curable plastic. The layers sprayed on last are, however, preferably without glass fibres in order to get a smooth surface of the laminate. In the manufacturing of a bath tub the shell 1 made from thermoplastic is provided with a first layer 2 of curable plastic for general reinforcing of the shell. On the part of the shell, which is later to be the bottom of the tub, one or more core elements 3 are placed, said elements being possibly made to adhere by means of a polyurethane adhesive with an open time of 1-2 minutes. After the placing of the core elements a carrier profile 5 may be mounted, said profile having sufficient strength for carrying adjustable legs 6. Then a further curable plastic 9 is sprayed on the core element and the carrier profile is embedded. After the curing of the curable plastic the tub is turned, and air holes are bored from the inner side of the tub into the space contained in the core element. By mounting from the outside an air supply to the space in the core element, this space will act as a manifold, which can provide a great number of air holes with air, which is induced to bubble up through the water, which is filled into the tub during the use.

For further reinforcement of the tub sheets or boards of plywood, chipboard or the like may in addition to or instead of the core element be embedded, said sheets distributing the concentrated loadings on the bottom of the tub and transferring the forces from these loads to the legs 6.

To prevent the curable plastic from absorbing humidity from the surrounding air before the curing and, therefore, from swelling, it is necessary that the air humidiry during the spraying on is very low, preferably less than 60% relative humidity and preferably below 40%. After the curing the poylurethane plastic acquires a good resistance towards moist.

The spraying on may preferably be carried out by means of a robot programmed to apply the curable plastic in a number of even layers, in such a way that a homogenous, predetermined thickness, which may possibly be increased at places, where heavy loadings are expected, is achieved. Preferably one robat may serve two working stations, curable plastic being appplied on one shell, while the other station is prepared, and later spray is applied on the second station, while core elements are mounted on the first station, etc.

The core elements may partly consist of tubshaped plastic parts which may be manufactured by spraying polyurethane plastic in a matrix or they may be manufactured from polystyrol foam. In the latter case the core element will be left embedded, while, if a manifold is to be produced, access to the front piece may be obtained by means of a bore, after which injection of a solvent will dissolve the structure of the foam plastic, the hollow space being thereby opened.

## Claims

1. Method for the manufacture of a laminated article with a layer of vacuum-formed thermoplastic, preferably polymethyl metacrylate, as well as a sprayed on layer of a preferably glass fibre-reinforced curable plastic, **characterized** in that the curable plastic, which is a polyurethane, is applied through spraying of a reactant mixture with such a relation between the polyol and polyisocyanate components that an open time of 4-15 seconds is achieved, the polyurethane plastic being applied in such a number of layers succeeding one another that the desired thickness of the layer is attained and the relative humidity of the surrounding being, until curing has substantially taken place, under 60%, preferably under 40%.

2. Method according to claim 1, **characterized** in that core elements in the shape of hollow spaces or reinforcements embedded into the outer laminate are provided during the application of the individual layers of polyurethane and embedded by means of the succeeding layers.

3. Method according to claim 2, in which the core elements are made from expanded polystyrene, **characterized** in that an opening to the core elements is provided and that a solvent, for instance acetone, is introduced into the opening to dissolve the core elements.

4. Method according to claims 2 or 3, in which the article is a bubble bath, **characterized** in that the core elements are made in such a way that they connect the planned inlets for air and water, the inlets being made in the shape of bores into the core elements.

5. Laminated bath manufactured by means of the method according to any of the claims 1-4 and having a number of openings in the tub with connecting means to the inlet and outlet installations, **characterized** in that two or more of the openings are connected with a common hollow space made in the outer layer of cured plastic, to which hollow space connecting means are connected.